# EUROPEAN PATENT APPLICATION

(11) **EP 3 416 003 A1**
(43) Date of publication of application: **19.12.2018**
(21) Application number: 17175998.8
(22) Date of filing: 14.06.2017
(51) Int. Cl.: G05B 17/02, G05B 19/045, G05B 23/02

(54) **SYSTEM ANALYSIS USING STATE MACHINES**

(71) Applicant: Nokia Solutions and Networks Oy, 02610 Espoo (FI)
(72) Inventor: SEGALL, Itai, 44000 KFAR SABA (IL); GOLDSTEIN, Maayan, 44000 KFAR SABA (IL)
(74) Representative: MERH-IP Matias Erny Reichl Hoffmann Patentanwälte PartG mbB

(57) **Abstract**

Provided is a method for analyzing a state of a system. The method comprises collecting first behavioral data of the system during a first operation phase of the system, determining first system states based on the first behavioral data, determining a first behavioral model of the system based on the first system states, wherein the first behavioral model comprises the first system states and transitions between the first system states, collecting second behavioral data during a second operation phase, determining second system states based on the second behavioral data, determining a second behavioral model based on the second system states, wherein the second behavioral model comprises the second system states and transitions between the second system states, comparing the first behavioral model and the second behavioral model to derive behavioral differences between the behavioral models, assessing the behavioral differences as normal or abnormal, and if behavioral differences are assessed as abnormal, triggering an alert or an automatic maintenance operation.

## Description

### TECHNICAL FIELD

The present disclosure relates to the analysis of a system. In particular, the present disclosure relates to a computer-implemented process of detecting abnormal system behavior.

### BACKGROUND

As the complexity of systems consisting of a plurality of interoperating software and hardware components increases, it may become more and more difficult for a human operator to fully understand and analyze such systems in the presence of abnormal behavior. For instance, many software components record log data to allow operators to examine the status of the system and determine abnormal behavior. However, the information in log data typically varies in style, granularity, source of information, etc., thus making the task of manual analysis and reasoning a highly challenging one. Moreover, large amounts of log data may need to be considered in order to fully understand a given situation, which may be challenging for an operator, both in terms of time and effort.

### SUMMARY

These and other shortcomings of prior art approaches may be overcome by capturing the system behavior by Finite State Machines (FSMs) which may be mined from behavioral data extracted from system log data, and computing the difference between a current behavioral model and one or more reference behavioral models reflecting the intended operation. If an abnormal behavior of the system is detected, a maintenance operation may be triggered or the system may be shut down. Otherwise, or in addition, a visual framework that graphically presents and emphasizes the changes in the behavior may be used to assist in tracing their root cause.

The system analysis may comprise collecting first behavioral data of a system during a first operation phase of the system, determining first system states based on the first behavioral data, determining a first behavioral model of the system based on the first system states, wherein the first behavioral model comprises the first system states and transitions between the first system states, collecting second behavioral data during a second operation phase, determining second system states based on the second behavioral data, determining a second behavioral model based on the second system states, wherein the second behavioral model comprises the second system states and transitions between the second system states, comparing the first behavioral model and the second behavioral model to derive behavioral differences between the behavioral models, assessing the behavioral differences as normal or abnormal, and if behavioral differences are assessed as abnormal, triggering an alert or an automatic maintenance operation.

For instance, the first behavioral model may represent a (reference) operation phase during which intended system behavior was exhibited, while the second behavioral model may represent an operation phase under test. Thus, the first behavioral model may be called a reference model and the second behavioral model may be called a test model. In this regard, the term "normal behavior" as used throughout the description and clams, is intended to be understood as characterizing an operation phase during which a system shows a behavior that the system's operator/developer expects, while an "abnormal behavior" relates to an operation phase in which, for example, system services are unavailable or performance issues occur. Moreover, the term "maintenance operation" as used throughout the description and clams, is intended to be understood as an operation which is directed at overcoming the abnormal behavior by reducing or avoiding the occurrence of behavioral differences of the system under test (compared to the reference).

The behavioral differences may include one or more system states by which the behavioral models differ and/or one or more transitions or transition sequences by which the behavioral models differ, and/or a difference in a number, frequency or probability of transitions or transition sequences between the same or corresponding states and/or a difference in transition times between the same or corresponding states.

For example, repeating the same state sequence multiple times may be indicative of an error which triggers re-executions of the sequence.

Comparing the first behavioral model and the second behavioral model may comprise finding common paths in both models and/or computing frequencies and latencies in transitions.

In this regard, the term "path" as used throughout the description and clams, is intended to be understood as relating to sequences of state transitions (triggered by actions/events recorded by the system) connecting an initial state (at which a process/service performed/provided by the system starts) to a terminal state (at which the process/service is terminated). In this regard, paths which are common to the behavioral models (i.e. the reference model and the test model) may form the "common paths", paths which are only present in the second behavioral model may form "added paths", and paths which are only present in the first behavioral model may form "removed paths".

Assessing the behavioral differences may comprise identifying added and/or removed states between the behavioral models. Alternatively, or in addition, assessing the behavioral differences may comprise identifying a difference in frequency of usage for a transition, i.e. the frequency/probability with which a transition occurred during execution as can be derived from the execution log data/behavioral data.

For example, the second behavioral model may comprise an added state or path, i.e. a state or path which is not present in the first behavioral model. If said added state or path only occurred in some of the executions of the system, its presence may be indicative of abnormal behavior. The same may be true for the frequency/probability at which a transition occurs in the two models, which may also be indicative of abnormal behavior. For example, if a transition or loop is repeated more often than needed, one may conclude an abnormal or erroneous behavior. In this regard, it is noted that identifying added states or paths may comprise identifying common paths and identifying all states along two common paths as common states. This allows that states are assessed as common if they are semantically similar (in regard to the behavior derived from the models) as states in the models which have the same label may nevertheless differ semantically between the models and thus be classified as added/removed states.

The first behavioral model may include a first finite-state machine and the second behavioral model may include a second finite-state machine. A finite-state machine, FSM, is defined by its states and transitions between these states.

Accordingly, system behavior may be tracked and analyzed based on extracting a finite number of states and transitions between the states.

Collecting behavioral data may include collecting execution log data of the system, wherein the execution log data includes one or more of a timestamp, an indication of an entity (e.g. hardware and/or software) that generated the log data. Optionally an indication of a machine that executed the software that generated the log data may be included.

Thus, the log data may allow correlating abnormal behavior with hardware and/or software instances of the system.

Determining the first or second behavioral model may include executing a kTails algorithm (c.f., A. Biermann and J. Feldman, "On the synthesis of finite-state machines from samples of their behavior," Computers, IEEE Transactions on, vol. C-21, no. 6, pp. 592-597, June 1972) based on the first or second system states. Other algorithms to generate a behavioral model (e.g. a FSM) from log data may also be applied, such as disclosed e.g. in "Leveraging Existing Instrumentation to Automatically Infer Invariant-Constrained Models" by Ivan Beschastnikh, Yuriy Brun, Sigurd Schneider, Michael Sloan, Michael D. Ernst, presented at ESEC/FSE'11, September 5-9, 2011, Szeged, Hungary; or in "Behavioral Resource-Aware Model Inference" Tony Ohmann, Michael Herzberg, Sebastian Fiss, Armand Halbert, Marc Palyart, Ivan Beschastnikh, Yuriy Brun, presented at ASE'14, September 15-19, 2014, Västerås, Sweden.

For instance, state sequences within a model may be merged if (and to the extent at which) the initial states of the sequences share the same future, i.e., they are followed by the same sequence of k (with k being an integer) actions/events governing the state transitions.

Comparing the first behavioral model and the second behavioral model may comprise merging the same or similar system state sequences of the first system states and the second system states.

For example, common paths and states may be merged to generate a base which is common to both models.

Triggering an alert may include displaying a (graphical) representation of the abnormal behavioral differences and/or the corresponding behavioral data. The representation may be displayed on a screen of the system or on a screen of a monitoring device, and may assist a system operator in monitoring system execution.

For instance, the abnormal behavioral differences may be brought to the operator's attention, such as by highlighting the abnormal behavioral differences.

Displaying the abnormal behavioral differences and/or the corresponding behavioral data may include displaying or providing a link to corresponding portions of execution log data of the system.

By this, an operator may be enabled to access more detailed information on the system execution when attempting to find a root cause for the abnormal behavior. If a root cause can be identified without human intervention, an automatic maintenance operation may be performed.

The automatic maintenance operation may include shutting down and/or restarting a system service or parts thereof.

For example, an unavailable system service may be restarted and only if the abnormal behavior persists or reoccurs after restarting the system service, the abnormal behavior may be brought to the operator's attention for deeper inspection and maintenance.

Collecting second behavioral data may be performed during a second operation phase of a second system. The second system may be a system under test and may be different from the (reference) system.

Hence, the first behavioral model (reference model) may be based on log data of the (reference) system while the (second) system under test may be a system that should exhibit the same or a similar behavior. In this regard, it is noted that differences in the behavioral model may be classified as normal and abnormal, wherein the normal differences may correspond to expected/allowed differences between the reference system and the system under test.

Some or all of the previous steps may be performed by a computing device which carries-out computer-readable instructions stored on a computer-readable medium. The computing device may be part of the reference or test system. Alternatively, the computing device may be a separate monitoring device.

The system may comprise a plurality of interconnected computing devices to execute software to provide a plurality of interoperating services.

In particular, the system may be configured to determine first system states based on first behavioral data representing a first operation phase of the system at which the services interoperate successfully, determine a first behavioral model based on the first system states, wherein the first behavioral model comprises the first system states and transitions between the first system states, determine second system states based on second behavioral data representing a second operation phase of the system, determine a second behavioral model based on the second system states, wherein the second behavioral model comprises the second system states and transitions between the second system states, compare the first behavioral model and the second behavioral model to derive behavioral differences between the behavioral models, assess the behavioral differences as normal or abnormal, and if behavioral differences are assessed as abnormal, triggering an alert or start a maintenance operation.

Implementations of the system may include, but are not limited to, one or more processor, one or more application specific integrated circuit (ASIC) and/or one or more field programmable gate array (FPGA). Implementations of the system may also include using other conventional and/or customized hardware such as software programmable processors.

Moreover, it will be appreciated that method steps and system features may be interchanged in many ways. In particular, the details of the disclosed system can be implemented as a method and vice versa, as the skilled person will appreciate.

### BRIEF DESCRIPTION OF THE DRAWINGS

The foregoing aspects and many of the attendant advantages of this document will become more readily appreciated as the same becomes better understood by reference to the following detailed description, when taken in conjunction with the accompanying drawings, wherein like reference numerals refer to like parts throughout the various views, unless otherwise specified.
Fig. 1 is a flow diagram of an example method for analyzing a system using behavioral data.
Fig. 2 is a block diagram of an example system which collects behavioral data.
Fig. 3 and 4 illustrate an example process of determining a behavioral model based on behavioral data.
Fig. 5 illustrates an example process of comparing behavioral models to determine behavioral differences.
Fig. 6 illustrates an example process of responding to determined behavioral differences.
Fig. 7 further illustrates steps of the disclosed method.
Fig. 8 - Fig. 11 illustrate steps of the method on basis of a shopping cart example.
Fig. 12 illustrates an example for a difference computation for behavioral data collected from two wireless base stations.

### DETAILED DESCRIPTION

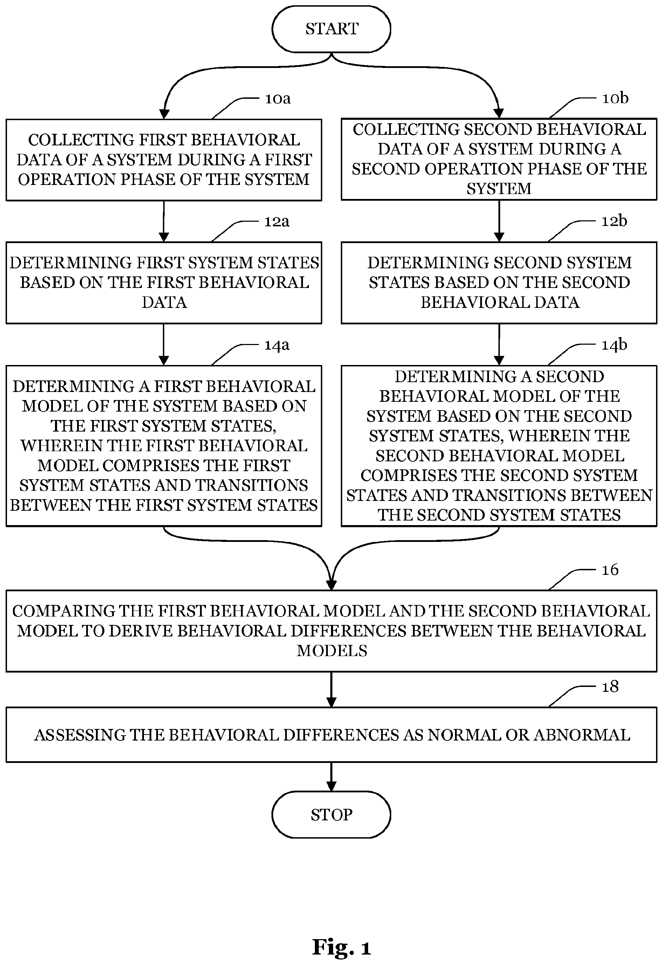

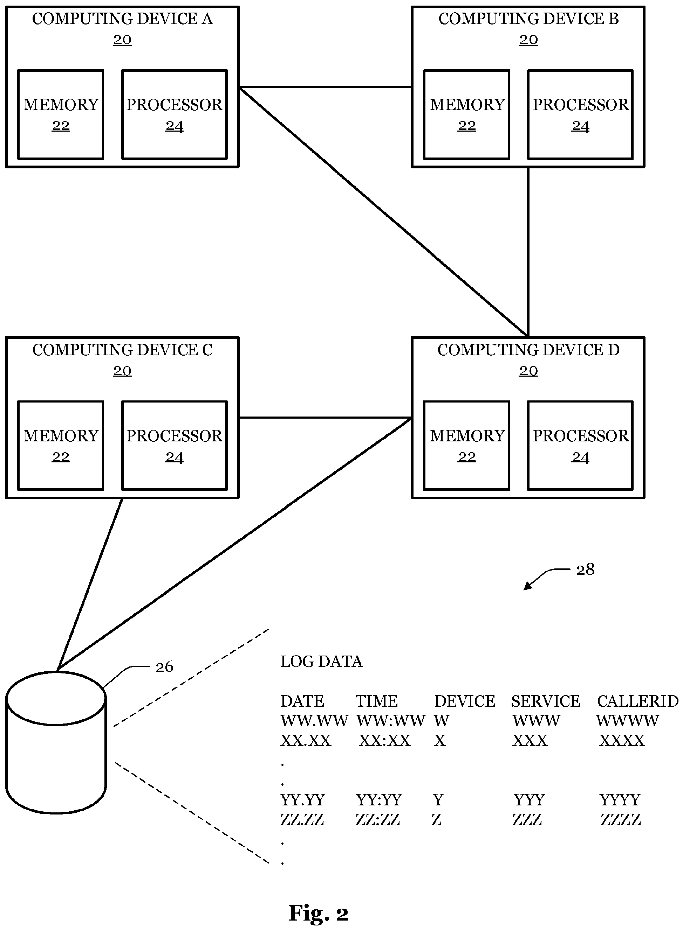

Fig. 1 is a flow diagram of an embodiment for a method for analyzing a system using behavioral data. The method comprises steps 10a, 10b of collecting behavioral data. The behavioral data may be based on execution log data of a system as depicted in Fig. 2. The system may comprise a plurality of interconnected computing devices 20 comprising a memory 22 and one or more processors 24 to execute interoperating software applications. The system may also comprise or be connected to one or more databases 26 which store the log data 28. The log data 28 may represent a set of traces, where each trace may correspond to an ordered list of actions/events specific to some element of the system, such as, for example, actions performed by a software application executed on a computing device 20 or events logged by a software application executed on a computing device 20.

The log data 28 may include a timestamp, an execution time, an indication of the software application that performed the action/logged the event, an indication (e.g., an IP address) of the computing device 20 that executed the software that performed the action/logged the event, an ID (e.g., an IP address) of an element that called a service relating to the action/event, etc. For example, the log data 28 may include a request of an element having an IP address "WWWW" regarding a service "WWW" which was received by device "W" on "WW.WW" at "WW:WW". The log data 28 may also indicate that the device "W" responded to this request by completing the requested service "WWW" at a certain time and date.

As the log data 28 may be generated by different sources (e.g., different software applications executed on the computing devices 20), a log data normalization may be performed. The log data normalization may convert the log data 28 to a normalized form. For example, the log data normalization may include filtering out less important information, normalizing formats (e.g. field separators), extracting identifier fields, etc. The log data normalization step may be automatic or semiautomatic and involve input of an operator. However, in the case that the different sources apply a unified data logging format, log data normalization may not be required, as the recorded log data 28 may be already in normalized form when being generated/recorded.

The steps 10a, 10b of collecting the behavioral data may be performed in relation to a single physical system (such as the system described in relation to Fig. 2), wherein the steps may be performed one after the other. For example, the collecting step 10a may be performed during a first operation phase at which the system operates as intended, which allows using the behavioral data for characterizing the reference behavior. The collecting step 10b may be performed during a second succeeding operation phase which is to be tested, wherein the operation phases may differ in regard to the system environment, system hardware, system software, etc. However, the second operation phase may also precede the first operation phase and it is to be noted that the method is not limited to a specific order of operation phases. For instance, seemingly abnormal behavior of a system may be analyzed after the system has been brought back/has returned to normal execution, to prevent future malfunctions or perform a check regarding system integrity.

In addition, the steps 10a, 10b may be performed in relation to different systems. For example, the collecting step 10a may be performed in relation to a reference system while the collecting step 10b may be performed in relation to a similar or identical system under test, the operation of which is to be compared with the operation of the reference system. For example, the reference system may have been developed in a safe/controlled environment and may have been extensively tested to ensure that the reference system operates correctly.

In this regard, it is noted that the method is not limited to comparing behavioral models (and hence collecting behavioral data) of (exactly) two systems but may also involve comparing behavioral models (and hence collecting behavioral data) of three or more systems, where for example, a behavioral model of a reference system may be compared with behavioral models of a system under test, wherein the behavioral models of the system under test may reflect both, seemingly normal and seemingly abnormal behavior.

At steps 12a, 12b of Fig. 1, the collected behavioral data is used to determine system states. The system states may correspond to particular actions/events or sequences of actions/events that characterize the operation of the system from which the behavioral data has been collected. Based on the system states, behavioral models may be determined in steps 14a and 14b. For example, the normalized log data may be automatically processed to extract a FSM using the kTails algorithm, e.g., the implementation provided as part of the Perfume tool (cf. T. Ohmann, K. Thai, 1. Beschastnikh, and Y. Brun, "Mining precise performance-aware behavioral models from existing instrumentation," in Companion Proceedings of the 36th International Conference on Software Engineering. ACM, 2014, pp. 484-487).

For instance, the kTails algorithm may be used to generate a FSM from a set of traces in two steps. First, a Prefix Tree Acceptor (PTA) may be built, i.e., a tree where the edges may be labeled with actions/events. The language accepted by the PTA may consist of the set of action/event sequences recorded in the traces. In this regard, it is noted that events/actions/states which always follow each other across the recorded traces may be merged into a single event/action/state to consolidate the behavioral data and reduce the processing effort. During the second step, the kTails algorithm may be used to transform the PTA into a FSM based on a heuristic. The heuristic may merge pairs of "k-equivalent" states, wherein states are "k-equivalent" if they share the same future of length k. The future of length k of a state may be defined as the set of action/event sequences of maximum length k that follow said state.

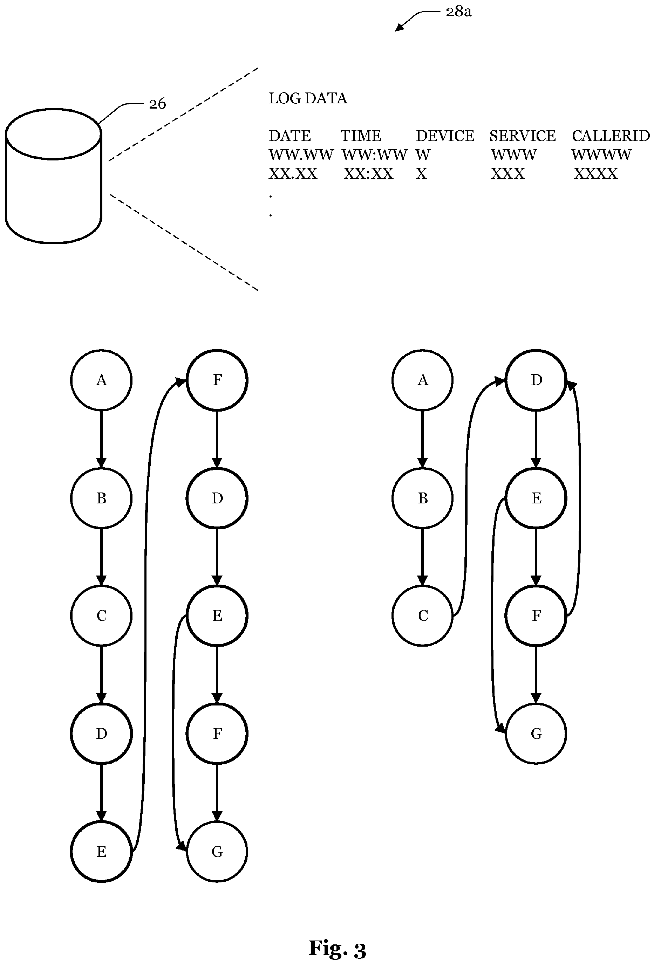

For example, Fig. 3 shows a sequence of actions/events (labelled "A" to "G") extracted from the log data 28a characterizing the reference behavior. When processing the sequence of actions/events by merging the pairs of "2-equivalent" states, the action/event sequences "D E F" (and the corresponding states) may be merged. I.e., as the states followed by the sequence of actions/events D and E are "2-equivalent" and merged, the consecutive states that are entered by the system by virtue of the actions/events D, E, and F may also be merged, as said states are entered via sequences of identical transitions originating from the "2-equivalent" states. The resulting finite state system behavioral model of the reference system, which may be represented by the logged actions/events or action/event sequences which cause transitions between the states of the behavioral model, may be used to assess the behavior of the reference system.

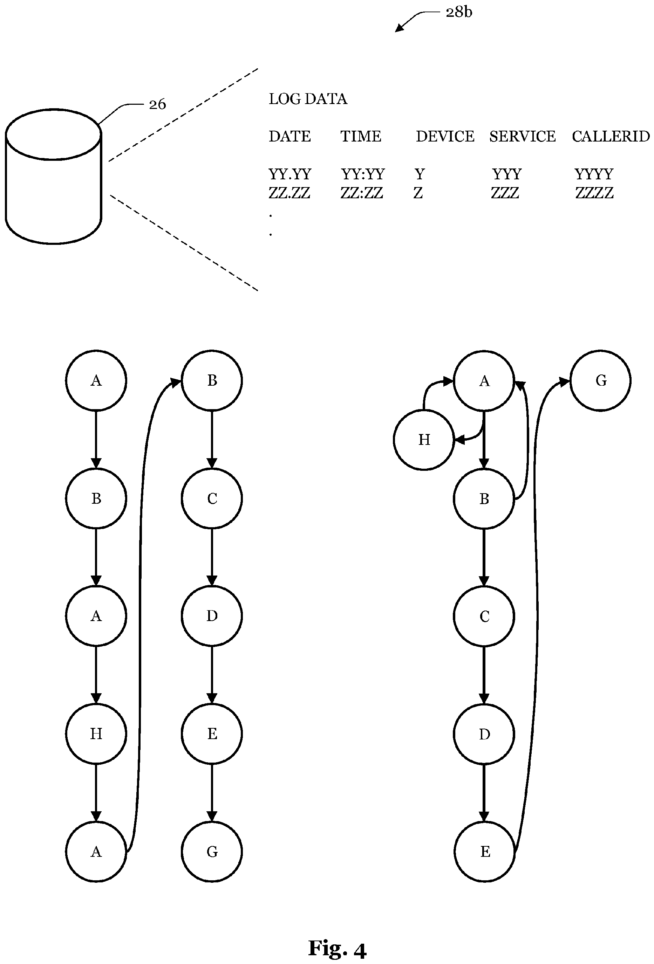

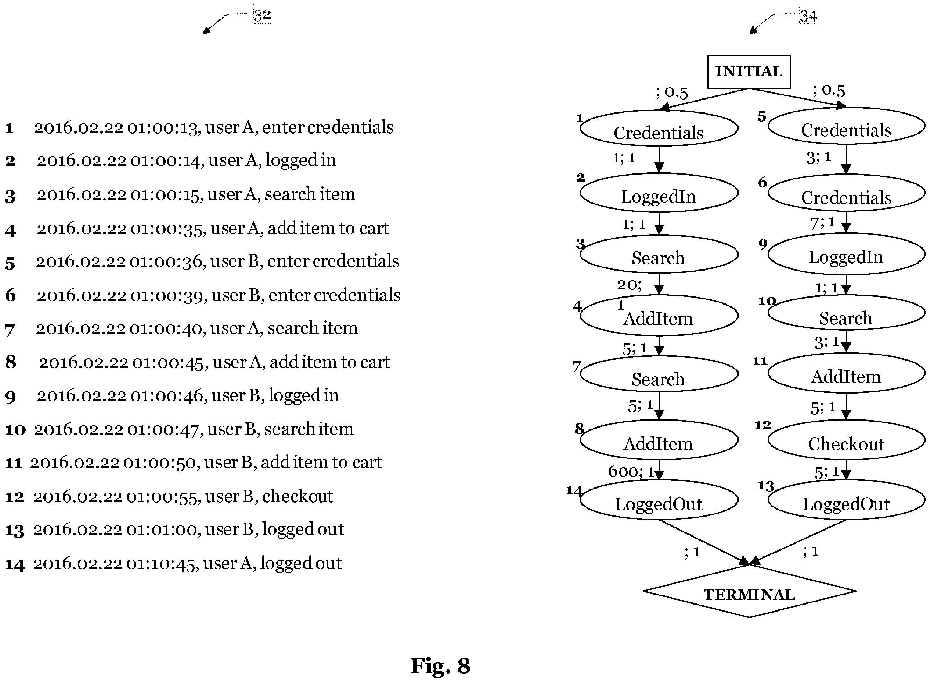

Fig. 4 shows the sequence of actions/events (labelled "A" to "G") extracted from the log data 28b of the system under test. When processing the sequence of actions/events as indicated above, the action/event sequences "A B" may be merged. The resulting finite state system behavioral model of the system under test, which may be represented by the logged actions/events or action/event sequences which cause transitions between the states of the behavioral model, may be used to describe the behavior of the system under test which is to be assessed. In this regard, it is noted that while the models in Fig. 3 and Fig. 4 only contain a relatively small number of events, the method is not limited to a specific number of events or model size but instead has been found to scale well to systems exhibiting more states. In this regard, it is noted that the sequences of actions/events shown in Fig. 3 and Fig. 4 are merely illustrative and that various other sequences such as those described with reference to Fig. 8 to 10 may also occur.

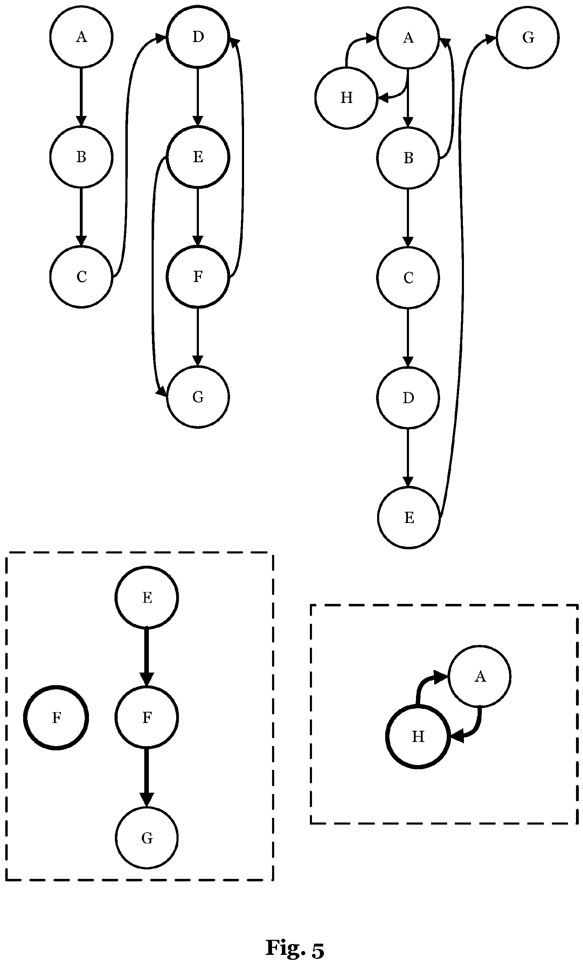

After performing the steps 14a, 14b of determining the behavioral models as described with reference to Fig. 3 and Fig. 4, the behavioral models may be compared as indicated in Fig. 5 to derive behavioral differences between the behavioral models. Fig. 5 illustrates examples for actions/events and action/event sequences by which the behavioral models differ. For example, the behavioral model of the reference system comprises the "removed" event "F" and the "removed" action/event sequence "E F G" which is missing from the behavioral model of the system under test. Moreover, the "added" action/event "H" is only present in the system under test, as well as the "added" action/event sequences "A H" and "H A".

The step 16 of comparing the behavioral models may also comprise finding (all or substantially all) paths in both models, computing common (as well as added and removed paths), and/or computing frequencies and latencies in transitions to identify actions/events in regard to which the behavioral models differ. In this regard, it is noted that although self-loops (where a transition is made from a state to itself) may be ignored, finding all paths may still be impossible if loops involving a sequence of states are present in at least one of the behavioral models. To overcome this challenge, an upper limit for the path length may be established (for example, twice the number of states in a behavioral model) to find substantially all paths.

The paths may then be used to find common, added and removed states. States common to both behavioral models may be states which are part of a common path while the remaining states may be divided into the added and removed states. Moreover, if two states with identical label are not part of a common path, but appear only once in each behavioral model, said states may also be treated as common states (instead of being assessed as added/removed states which are to represent the behavioral differences).

If performance data is available, a difference in a number, frequency or probability of transitions along common paths may also be calculated and compared with a threshold to assess the relevance of the difference. Moreover, assessing the behavioral differences may comprise identifying the added/removed states or paths. Having found behavioral differences between the behavioral models as illustrated in Fig. 5, the behavioral differences may be assessed as normal or abnormal at step 18.

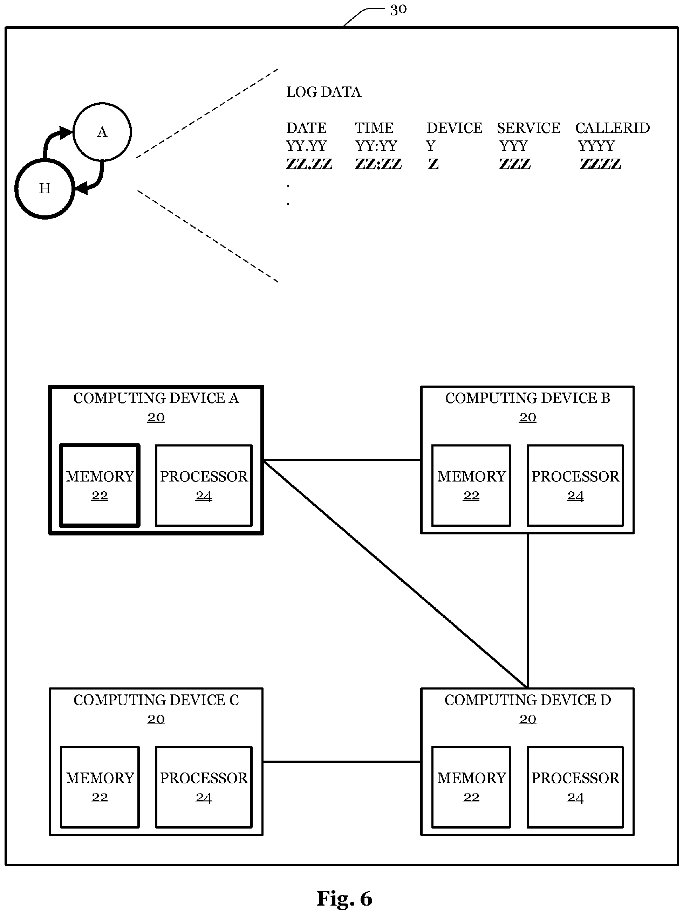

If behavioral differences are assessed as abnormal, an alert or an automatic maintenance operation may be triggered as illustrated in Fig. 6. Abnormal behavior may be indicated by the one or more of the following types of outliers:
- Execution flow outlier - this type of outlier may occur when some behavior unseen previously in the normal execution is seen in the abnormal execution. This also includes the cases when the probability for a transition to some state changes significantly. As an example, the case could be considered where some security attack is under place, such that many login attempts occur. The probability to enter the relevant state will increase significantly in the "abnormal" model, compared to the normal execution.
- Transition time performance degradation - this type of outlier may occur when there is some slowdown in the system, such that the transition from one state to another takes longer. By looking, for example, at the maximum time it took for a device to make this transition, it may be focused on elements that have some problem, such as a hardware problem.

The outliers may be automatically computed as part of a difference model computation and may be visualized on the difference model, e.g., using bold and dashed lines and various colors. In particular, the following parts of the differences may be highlighted:
- Added/removed states - states that were a part of only one of the models are emphasized as they may show a change in the behavior of the underlying system.
- Transitions with a significant increase in transition probability or time may be highlighted as they may be indicative of a performance issue in one of the monitored devices. The significance of the change may be defined based on a predefined threshold.
- Transitions with a high transition probability may be highlighted as they may be indicative of reoccurring attempts to perform some functionality that fails due to a problem in one of the monitored devices.

For example, action/event "H" which may involve a temporarily failed access to memory element 22 of computing device 20 "A" may be classified as representing abnormal behavior that triggers an alert and a maintenance operation. As shown in Fig. 6, triggering an alert may include displaying the abnormal behavioral differences and/or the corresponding behavioral data on a screen 30.

For example, displaying the abnormal behavioral differences and/or the corresponding behavioral data may include displaying or providing a link to corresponding execution log data of the system. Moreover, the triggered automatic maintenance operation may include shutting down and/or restarting a system service or a part thereof. For instance, the content of memory element 22 of computing device 20 "A" may be transferred to memory element 22 of computing device 20 "B" which takes over the shut-down services previously provided by computing device 20 "A" that require access to memory element 22 of computing device 20 "A" to avoid data loss/service degradation. In another example involving newly deployed software, the behavioral model of the new software may be compared with a reference model (e.g., a behavioral model of the last working version, a behavioral model extracted in a testing environment, or a behavioral model extracted for some users and locations) and a rollback may be triggered if unexpected behavior is identified as part of the comparison.

Thus, the above described method allows to automatically compare between service executions as exhibited in their log files. The behavior is captured by behavioral models (such as FSMs) which may be enhanced with metadata, such as performance related data (e.g., transition times, transition frequencies, transition probabilities, coloring to indicate added/removed states/transitions, a significant increase in transition time/frequency/probability, a high transition frequency/probability, etc.). All the information may be mined from log files and monitored metrics. A monitoring device may then compute the difference between the current model and behavioral models created when/where the service was known to operate well, to detect and (if required) emphasize changes in the behavior. A visual framework that graphically presents the changes in the behavior may be used to trace the root cause of the change as witnessed by the log data.

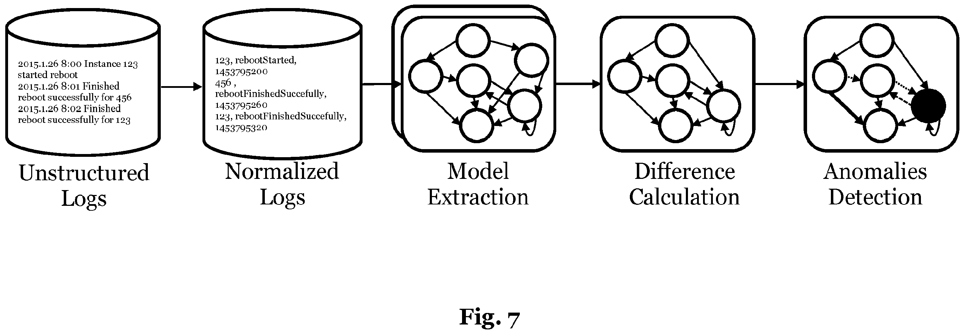

In particular, as illustrated in Fig. 7, an embodiment of the disclosed method may comprise steps of:
- Log normalization, where the log data is brought to a normalized form by filtering out less important information, normalizing formats (e.g. field separators), extraction of identifier fields, converting messages to a single word, etc.
- Behavioral model extraction for normal and abnormal logs. In this step, each set of log data is represented as a model, e.g., a FSM, which captures the behavior witnessed in the log data and approximates the system behavior. Various spec mining techniques may be used in this step.
- Computation of differences between the models. During this step, different types of behavioral differences between the logs are identified. This may involve finding (all) paths in the models, computing (all or substantially all) common paths, and/or computing frequencies and latencies in the paths. Examples of extracted differences are states encountered in one run but not the other, difference in the frequency in which a certain path is taken, as well as significant changes in best- and worst-case time measurements between states.
- Triggering of a maintenance operations and/or visualization of the extracted differences (e.g., added paths/states in the model under test, a difference in the frequency in which a certain path is taken, etc.), including highlighting of major artifacts, and traceability back to the original log files. This step enables a root cause analysis.

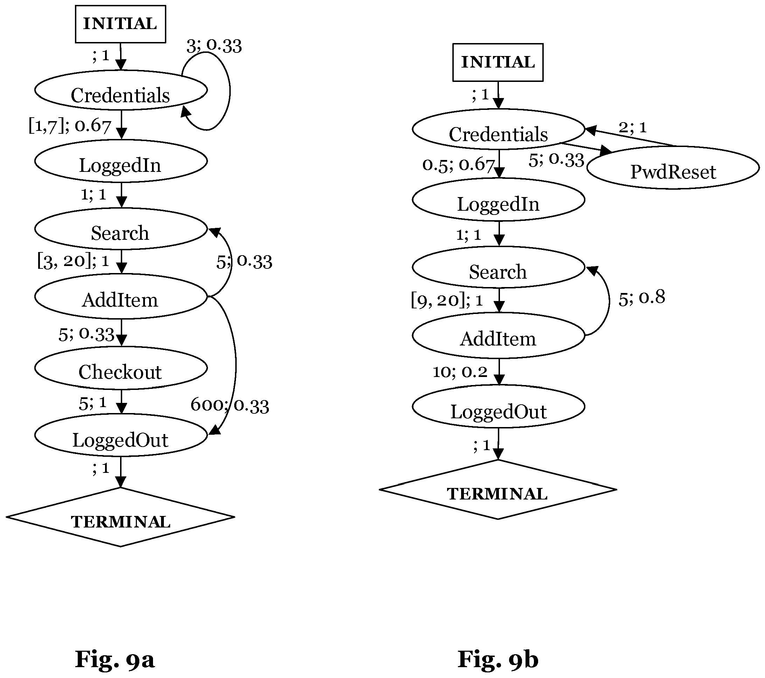

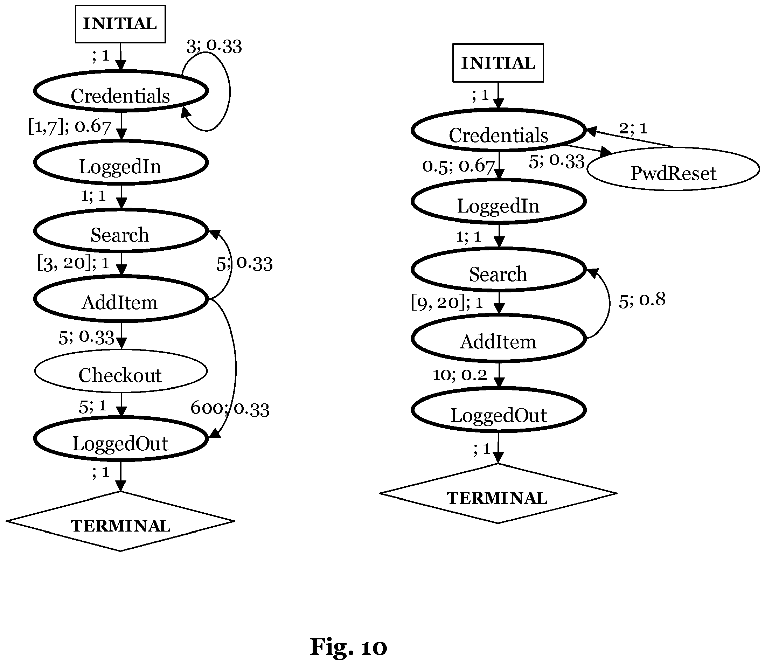

Fig. 8 - Fig. 11 illustrate steps of an embodiment of the disclosed method on basis of a shopping cart example. Fig. 8 illustrates example behavioral data 34 extracted from log data 32. The behavioral data 34 comprises (mutually independent) sequences of actions/events ordered in accordance with their appearance, wherein the sequences share the same initial and terminal action/event. Fig. 9a shows an example behavioral model generated based on the behavioral data 34 shown in Fig. 8 using the kTails algorithm described above. Fig. 9b shows an example for the behavioral model of a system under test. Fig. 10 illustrates examples for common paths (highlighted by bold-line ovals) of both behavioral models which identify the common states of both behavioral models:
- INITIAL->Credentials->LoggedIn->Search->AddItem->LoggedOut->TERMINAL
- INITIAL->Credentials->LoggedIn->Search->AddItem->Search->AddItem->Search->AddItem->LoggedOut->TERMINAL

To enable an efficient computation of the "common" paths, each unique node label may be converted into a single character. Thus, each path may be represented by a string. In the example, the first listed common path would turn into ICLSAOT, while the second would turn into ICLSASASAOT. Evens/actions with the same label in both behavioral models may be mapped into the same character. This conversion may allow finding common paths between the behavioral models by using a string matching algorithm. In another example, paths may simply be compared node-by-node.

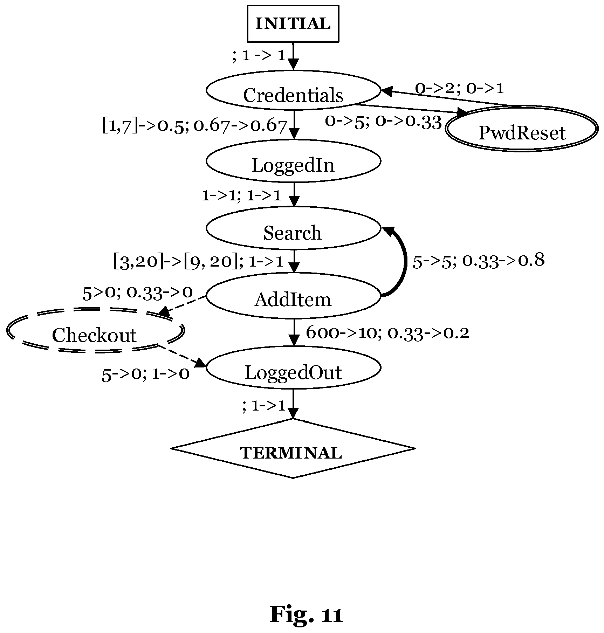

Based on the identified common paths, the behavioral differences may be identified and presented in a difference model as shown in Fig. 11. Each node in the graph may be marked as "common", "added", or "removed". In the example, the nodes named Credentials, LoggedIn, Search, AddItem, LoggedOut may be marked as "common". The node PwdReset may be marked as "added" and the node Checkout may be marked as "removed". The edges may also be marked as "common", "added" or "removed".

The method may return the computed graph along with metadata for the nodes and edges. In the difference model shown in Fig. 11, the "added" node PwdReset is emphasized by a double lined oval, while the "removed" node Checkout is emphasized by a dashed double lined oval. As shown, each edge may contain transition time and frequency computed for both behavioral models. For instance, the edge AddItem->Search may witness a significant change in frequency which may be indicative of abnormal behavior.

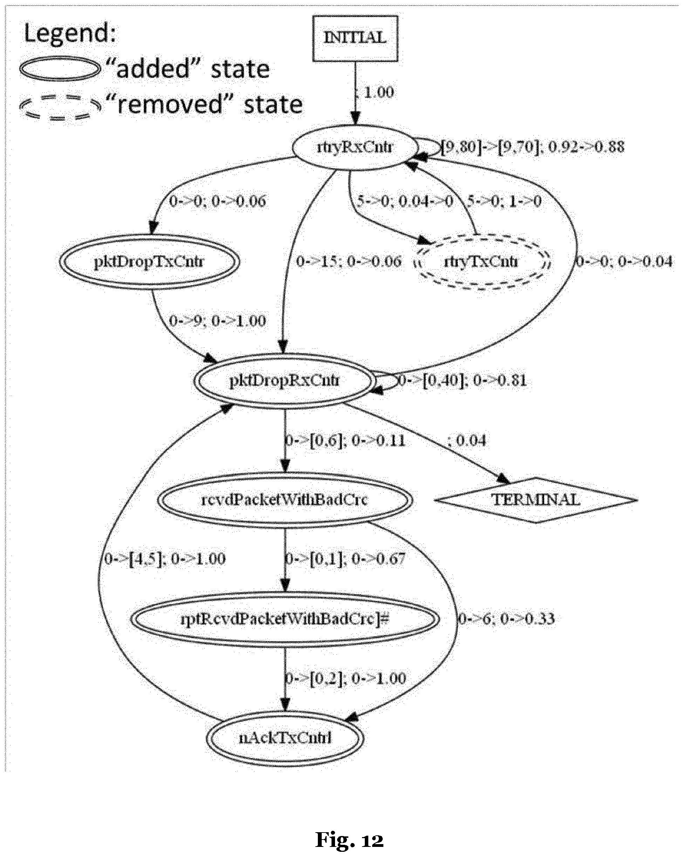

Fig. 12 illustrates the result of an example computation of differences between behavioral models generated from behavioral data/log data collected from two wireless base stations, wherein the edges of the resulting graph are decorated with metadata representing differences of transition time and probabilities in behaviors that exist between the models. In the example, there are two scenarios for processing packets that arrive at the base stations. In one case the packet is received by the station, the station sometimes retries the receival of the packet and upon success, the packet is further processed by a different application. This is represented by the only state that is common to both models rtryRxCntr. In four percent of the cases, the packet's retransmission is requested. This is represented by the state labelled rtryTxCntr. On the other hand, at a different station, a more complicated case occurs. When a packet with bad CRC is received (represented by the state labelled rvdPacketWithBadCrc) the system reacts by sending a nACK message (represented by the state labelled nAckTxCntrl) and drops the packet (represented by the state labelled pktDropRxCrc). Both models represent a behavior that is a part of the protocol for handling packets. The comparison between the models allows to identify/flag cases where a communication problem occurs and packets get dropped too many times at some base station compared to others.

Thus, the above described method enables a faster root cause analysis and problem resolution as it allows to compare/visualize the entire system behavior that led to the anomaly. This saves operator time and allows the operator to trace points in the abnormal behavior back to the original log lines that demonstrate it.

It should be noted that the system features described above correspond to respective method features that may however not explicitly be described, for reasons of conciseness. The disclosure of the present document is however, intended to extend also to such method features.

The functions of the various elements shown in the figures may be provided through the use of dedicated hardware as well as hardware capable of executing software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage.

A person of skill in the art would readily recognize that steps of the above-described method can be performed by programmed computers. Herein, some embodiments are also intended to cover program storage devices, e.g., digital data storage media, which are machine or computer-readable and encode machine-executable or computer-executable programs of instructions, wherein said instructions perform some or all of the steps of said above-described method. The program storage devices may be, e.g., digital memories, magnetic storage media such as a magnetic disks and magnetic tapes, hard drives, or optically readable digital data storage media. The embodiments are also intended to cover computers programmed to perform said steps of the above-described method.

It should be further noted that the description and drawings merely illustrate the principles of the proposed method and system. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the concept. Furthermore, all statements herein providing principles, aspects, and embodiments of the invention, as well as specific examples thereof, are intended to encompass equivalents thereof.

The present invention may be embodied in other specific systems and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. A system analysis method, comprising:
collecting first behavioral data of a system during a first operation phase of the system;
determining first system states based on the first behavioral data;
determining a first behavioral model of the system based on the first system states, wherein the first behavioral model comprises the first system states and transitions between the first system states;
collecting second behavioral data during a second operation phase;
determining second system states based on the second behavioral data;
determining a second behavioral model based on the second system states, wherein the second behavioral model comprises the second system states and transitions between the second system states;
comparing the first behavioral model and the second behavioral model to derive behavioral differences between the behavioral models;
assessing the behavioral differences as normal or abnormal; and
if behavioral differences are assessed as abnormal, triggering an alert or an automatic maintenance operation.

2. The method of claim 1, wherein the behavioral differences include:
one or more system states by which the behavioral models differ; and/or
one or more transitions or transition sequences by which the behavioral models differ; and/or
a difference in a number, frequency or probability of transitions or transition sequences between the same or corresponding states; and/or
a difference in transition times between the same or corresponding states.

3. The method of claim 1 or 2, wherein comparing the first behavioral model and the second behavioral model comprises finding common paths in both models and/or computing frequencies and latencies in transitions.

4. The method of claim 3, wherein assessing the behavioral differences comprises identifying added and/or removed states between the behavioral models.

5. The method of claim 3 or 4, wherein assessing the behavioral differences comprises identifying a difference in frequency of usage for a transition.

6. The method of any one of claims 1 to 5, wherein the first behavioral model includes a first finite-state machine and the second behavioral model includes a second finite-state machine.

7. The method of any one of claims 1 to 6, wherein collecting behavioral data includes collecting execution log data of the system, wherein the execution log data includes one or more of a timestamp, an indication of an entity that generated the log data.

8. The method of any one of claims 1 to 7, wherein determining the first or second behavioral model includes executing a kTails algorithm based on the first or second system states.

9. The method of any one of claims 1 to 8, wherein comparing the first behavioral model and the second behavioral model comprises merging the same or similar system state sequences of the first system states and the second system states.

10. The method of any one of claims 1 to 9, wherein triggering an alert includes displaying a representation of the abnormal behavioral differences and/or the corresponding behavioral data.

11. The system of claim 10, wherein displaying the abnormal behavioral differences and/or the corresponding behavioral data includes displaying or providing a link to corresponding execution log data of the system.

12. The method of any one of claims 1 to 11, wherein the automatic maintenance operation includes shutting down and/or restarting a system service or a part thereof.

13. The method of any one of claims 1 to 12, wherein collecting second behavioral data is performed during a second operation phase of a second system.

14. A computer-readable medium, comprising computer-readable instructions which, when carried out by a computer cause the computer to perform any of the previous methods.

15. A system, comprising:
a plurality of interconnected computing devices to execute software to provide a plurality of interoperating services;
wherein the system is configured to:
determine first system states based on first behavioral data representing a first operation phase of the system at which the services interoperate successfully;
determine a first behavioral model based on the first system states, wherein the first behavioral model comprises the first system states and transitions between the first system states;
determine second system states based on second behavioral data representing a second operation phase of the system;
determine a second behavioral model based on the second system states, wherein the second behavioral model comprises the second system states and transitions between the second system states;
compare the first behavioral model and the second behavioral model to derive behavioral differences between the behavioral models;
assess the behavioral differences as normal or abnormal; and
if behavioral differences are assessed as abnormal, triggering an alert or start a maintenance operation.
